# EUROPEAN PATENT APPLICATION

(11) **EP 3 381 726 A1**
(43) Date of publication of application: **03.10.2018**
(21) Application number: 18163889.1
(22) Date of filing: 26.03.2018
(51) Int. Cl.: B60J 5/10, B60R 13/04, B62D 35/00

(54) **BACK DOOR FOR VEHICLE**

(30) Priority: 31.03.2017 JP 2017072209
(71) Applicant: Kabushiki Kaisha Toyota Jidoshokki, Kariya-shi, Aichi 448-8671 (JP)
(72) Inventor: MATSUMOTO, Yusuke, Kariya-shi, Aichi 448-8671 (JP); KATO, Junya, Kariya-shi, Aichi 448-8671 (JP); AGEMI, Masaki, Kariya-shi, Aichi 448-8671 (JP)
(74) Representative: TBK

(57) **Abstract**

A back door for a vehicle is a back door for a vehicle attached to a rear portion of a vehicle body to be opened and closed. The back door for the vehicle includes: an outer member having an upper surface; a support member disposed along the upper surface and supporting the outer member at a rear end portion of a roof panel of the vehicle body to be rotatable in an up and down direction; and a cover member separably attached to an upper portion of the outer member. The outer member includes a depression receiving the support member. The cover member is attached to cover the depression.

## Description

### TECHNICAL FIELD

The present disclosure relates to a back door for a vehicle.

### BACKGROUND

Hitherto, for example, a back door for a vehicle disclosed in Japanese Unexamined Patent Publication No. 2016-68887 is known. The back door disclosed in Japanese Unexamined Patent Publication No. 2016-68887 is attached to a roof panel of a vehicle body to be rotatable in an up and down direction. The back door includes an outer member in which a roof portion of the back door has a predetermined length in a front and rear direction of the vehicle and a support member that is disposed at the roof portion of the back door and that supports the outer member at a rear end portion of the roof panel of the vehicle body to be rotatable in the up and down direction. A protrusion which protrudes upward in the roof portion of the back door is integrated with the outer member. A damper stay (a support member) is disposed inside the protrusion.

### SUMMARY

In the above-described related art, since the support member is disposed inside the protrusion integrated with the outer member, in order to access the support member at least opening the back door or separating the back door from the vehicle body is needed. In this way, in the above-described related art, poor workability in attachment and maintenance of the support member is a problem.

An object of an embodiment of the present disclosure is to provide a back door for a vehicle which improves the workability in attachment and maintenance of a support member.

A back door for a vehicle according to an embodiment of the present disclosure is a back door for a vehicle attached to a rear portion of a vehicle body to be opened and closed, including: an outer member having an upper surface; a support member disposed along the upper surface and supporting the outer member at a rear end portion of a roof panel of the vehicle body to be rotatable in an up and down direction; and a cover member separably attached to an upper portion of the outer member, in which the outer member includes a depression receiving the support member, and in which the cover member is attached to cover the depression.

In the back door for the vehicle according to an embodiment of the present disclosure, the support member is received in the depression of the outer member. The depression is covered by the cover member. According to this configuration, it is easy to access the support member by separating the cover member, for example, even when the back door is closed. Thus, it is possible to improve the workability in attachment and maintenance of the support member.

In the back door for the vehicle according to an embodiment of the present disclosure, the cover member may be an aerodynamic spoiler. In this case, it is possible to suppress an increase in the number of components.

In the back door for the vehicle according to an embodiment of the present disclosure, the depression may be provided at each of both end portions of the outer member in the vehicle width direction. In this case, it is easy to secure the backward visibility, since the support member is also located at each of both end portions of the outer member in the vehicle width direction.

According to an embodiment of the present disclosure, it is possible to provide a back door for a vehicle which improves the workability in attachment and maintenance of a support member.

### BRIEF DESCRIPTION OF THE DRAWINGS

FIG. 1 is a perspective view showing a vehicle including a back door according to an embodiment of the present disclosure.
FIG. 2 is a perspective view of the back door of FIG. 1 in a state where an aerodynamic spoiler is separated.
FIG. 3 is a side view of the back door when viewed from an arrow A in FIG. 2.

### DETAILED DESCRIPTION

Hereinafter, an embodiment of the present disclosure will be described in detail with reference to the drawings.

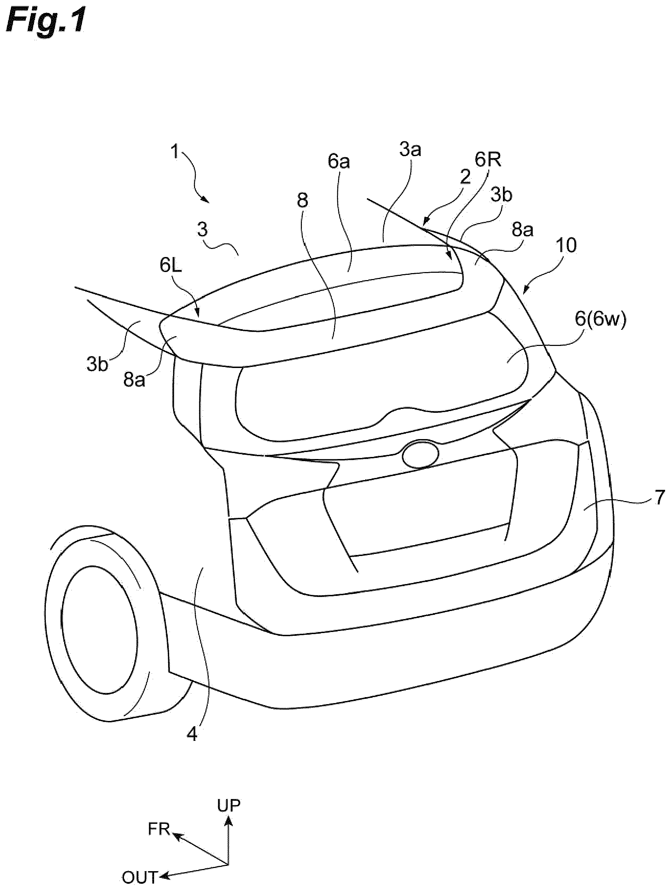

FIG. 1 is a perspective view showing a vehicle equipped with a back door for a vehicle according to the embodiment of the present disclosure. As shown in FIG. 1, a vehicle 1 includes a vehicle body 2. An upper portion of the vehicle body 2 is provided with a roof panel 3. A side panel 4 is provided at both side portions of the vehicle body 2. An arrow FR in the drawing indicates a front side in the front and rear direction of the vehicle 1. An arrow UP in the drawing indicates an upside in the up and down direction of the vehicle 1. An arrow OUT in the drawing indicates an outside in the vehicle width direction of the vehicle 1. In the description below, the terms of the front and rear and the up and down correspond to the front and rear direction and the up and down direction of the vehicle 1 in a state where a back door 10 is closed, respectively.

The back door 10 for the vehicle (hereinafter, simply the back door 10) is a door or a tailgate attached to a rear portion of the vehicle body 2. The back door 10 is supported at a rear end portion 3a of the roof panel 3 with a hinge (not shown) therebetween, to be rotatable in the up and down direction. That is, the back door 10 is attached to the rear portion of the vehicle body 2 to be opened and closed.

The "back door 10 is supported to be rotatable in the up and down direction" means that the back door 10 is supported capable of rotating so that any point on the back door 10 depicts a circular-arc orbit extending in the up and down direction with an axis of the hinge as a rotation axis when the back door 10 is opened and closed.

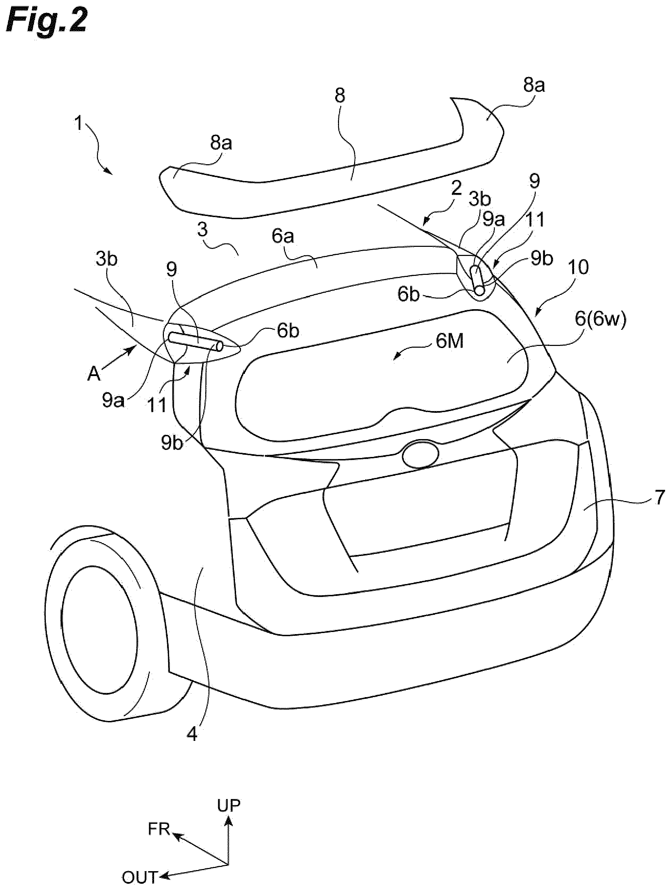

FIG. 2 is a perspective view of the back door of FIG. 1 in a state where an aerodynamic spoiler is separated. As shown in FIGS. 1 and 2, the back door 10 includes an inner panel (not shown), an upper outer member (an outer member) 6, a lower outer member 7, an aerodynamic spoiler (a cover member) 8, and a damper stay (a support member) 9. The inner panel has an opening formed at a position corresponding to a window portion 6w (to be described later). The inner panel is formed of resin (for example, polypropylene).

The upper outer member 6 is attached to the inner panel so as to cover an entire upper portion of the inner panel including the opening of the inner panel. The upper outer member 6 is attached to a rear side of the inner panel. The upper outer member 6 and the inner panel are supported at the rear end portion 3a of the roof panel 3 of the vehicle body 2 to be rotatable in the up and down direction. The upper outer member 6 includes an upper surface 6a. The upper surface 6a extends backward by a predetermined length or more from the rear end portion 3a of the roof panel 3 of the vehicle body 2. As an example, the upper outer member 6 is formed of resin (for example, polycarbonate). In the upper outer member 6, the window portion 6w is formed integrally. In the upper outer member 6, an outer surface side including the window portion 6w is molded by transparent resin. In the upper outer member 6, a portion other than the window portion 6w at an inside of the transparent resin is formed of colored resin. The colored resin is formed by, for example, two-color molding. Since the upper outer member 6 is formed of resin, the upper outer member 6 can be formed in an unrestricted shape. The upper outer member 6 may have a configuration with a glass window used in a steel panel.

The lower outer member 7 is attached to the inner panel to be disposed at the rear side of the inner panel at the lower portion of the upper outer member 6. The lower outer member 7 is formed of resin (for example, polypropylene).

The aerodynamic spoiler 8 is separably attached to the upper surface 6a of the upper outer member 6. The aerodynamic spoiler 8 extends from one end portion 6L to another end portion 6R of the upper outer member 6 in the vehicle width direction. Both end portions 8a of the aerodynamic spoiler 8 are curved forward. Both end portions 8a of the aerodynamic spoiler 8 are located at both end portions 6L and 6R of the upper surface 6a of the upper outer member 6 in the vehicle width direction. Both end portions 8a of the aerodynamic spoiler 8 are attached to the upper outer member 6 at the positions 6L and 6R. The aerodynamic spoiler 8 is formed of resin (for example, polypropylene).

As an example, a damper stay 9 is a telescopic gas damper. In the damper stay 9, one end portion 9a is attached to the rear end portion 3a of the roof panel 3 to be rotatable. In the damper stay 9, the other end portion 9b is attached to an attachment portion 6b of the upper outer member 6 to be rotatable. The damper stay 9 is disposed along the upper surface 6a of the back door 10 to extend along the front and rear direction of the vehicle body 2 while the back door 10 is closed. The damper stay 9 supports the upper outer member 6 at the rear end portion 3a of the roof panel 3 of the vehicle body 2 to be rotatable in the up and down direction. The damper stay 9 is provided at each of both end portions 6L and 6R of the upper surface 6a of the upper outer member 6 in the vehicle width direction.

The rear end portion 3a is a portion which supports one end portion 9a of the damper stay 9 and receives a force in the telescopic movement direction of the damper stay 9. The attachment portion 6b is a portion which supports the other end portion 9b of the damper stay 9 and receives a force in the telescopic movement direction of the damper stay 9. When the damper stay 9 is extended, the other end portion 9b of the damper stay 9 presses the attachment portion 6b upward while the damper stay 9 rotates about one end portion 9a (the rear end portion 3a) of the damper stay 9. Accordingly, the upper outer member 6 is raised.

The back door 10 allows suppression of an exterior appearance being impaired due to the arrangement of the damper stay 9 as below while improving the workability for attachment and maintenance of the damper stay 9.

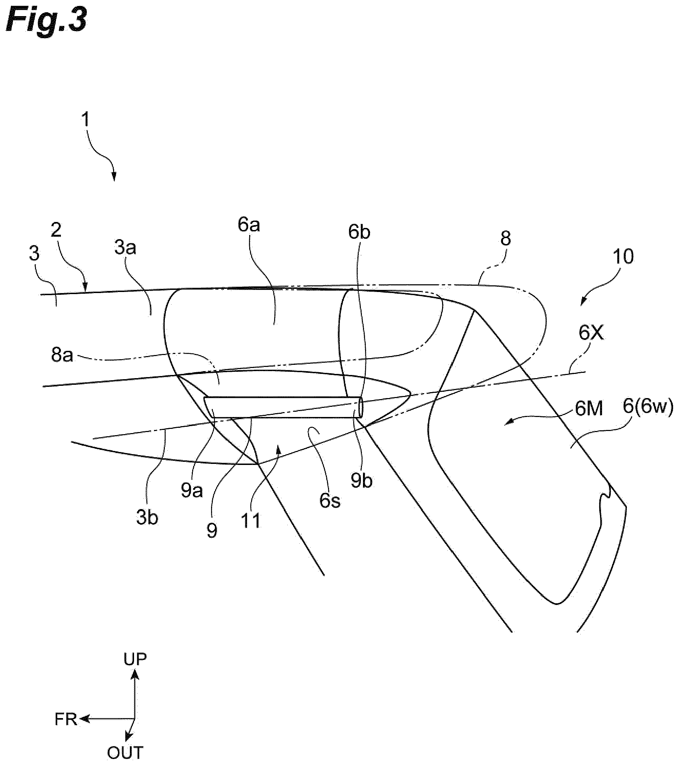

FIG. 3 is a side view of the back door when viewed from an arrow A of FIG. 2. As shown in FIGS. 2 and 3, the upper outer member 6 includes two depressions 11 provided at both end portions 6L and 6R of the upper surface 6a in the vehicle width direction. The depression 11 is a portion which is recessed in the upper surface 6a of the upper outer member 6 with respect to a bulging portion 3b of the roof panel 3. The bulging portion 3b is a part of the roof panel 3 at the boundary portion with the side panel 4. The bulging portion 3b may be a portion which bulges outward in the vehicle width direction to be continuous to the shapes of both end portions 8a of the aerodynamic spoiler 8.

The depression 11 is a region which is interposed between an imaginary surface extended backward from the surface of the bulging portion 3b and a curved surface 6s located at the inside in the vehicle width direction in relation to the imaginary surface. The curved surface 6s is a curved surface of which an axis 6X extends along the front and rear direction while the back door 10 is closed. The curved surface 6s is recessed toward a middle portion 6M of the upper outer member 6. A cross-sectional shape intersecting the front and rear direction of the curved surface 6s is, for example, a parabolic shape protruding toward the middle portion 6M of the upper outer member 6. The length of the depression 11 along the direction of the axis 6X of the curved surface 6s is longer than the length of the damper stay 9. The curved surface 6s is provided with the attachment portion 6b. The damper stay 9 is disposed in the depression 11 along the axis 6X direction of the curved surface 6s so that the damper stay 9 is received therein.

Both end portions 8a of the aerodynamic spoiler 8 are attached to the upper outer member 6 at both end portions 6L and 6R in the vehicle width direction of the upper surface 6a of the upper outer member 6 as described above. The width of each of both end portions 8a of the aerodynamic spoiler 8 intersecting the front and rear direction is equal to or larger than the width of each of the curved surfaces 6s in the corresponding direction. That is, each of both end portions 8a of the aerodynamic spoiler 8 covers the depression 11, respectively.

In the back door 10 with the above-described configuration, the damper stay 9 is received in the depression 11 of the upper outer member 6. The depression 11 is covered by the aerodynamic spoiler 8. According to this configuration, it is easy to access the damper stay 9 by separating the aerodynamic spoiler 8, for example, even when the back door 10 is closed. Thus, it is possible to improve the workability in attachment and maintenance of the damper stay 9. Further, the back door 10 enables to suppress an exterior appearance being impaired compared to, for example, a case where the upper surface 6a of the upper outer member 6 is provided with a protrusion protruding upward and the damper stay 9 is disposed inside the protrusion.

In the back door 10, since the aerodynamic spoiler 8 is separably attached to the upper surface 6a of the upper outer member 6, it is possible to easily attach and separate the damper stay 9 by separating the aerodynamic spoiler 8 and thus to further improve the workability in maintenance. In the back door 10, the damper stay 9 is received in the depression 11 covered by both end portions 8a of the aerodynamic spoiler 8. That is, the damper stay 9 is hidden. For that reason, an interior appearance when the back door 10 is opened is refined and a contact with the damper stay 9 is prevented.

In the back door 10, the aerodynamic spoiler 8 is attached to the upper outer member 6 to cover the depression 11. Accordingly, it is possible to suppress an increase in the number of components compared to, for example, a case where the depression 11 is covered by another member in addition to the aerodynamic spoiler 8.

The depression 11 is provided at each of both end portions 6L and 6R of the upper outer member 6 in the vehicle width direction. Accordingly, it is easy to secure the backward visibility, since the damper stay 9 is also located at each of both end portions 6L and 6R of the upper outer member 6 in the vehicle width direction.

The present disclosure is not limited to the above-described embodiment.

In the above-described embodiment, the damper stay 9 is exemplified as the support member, but the present disclosure is not limited thereto. The support member may be, for example, a rod of an electric-powered back door system in which an electric driving source opens and closes a back door through the rod, or the like.

In the above-described embodiment, the aerodynamic spoiler 8 is exemplified as the cover member, but the present disclosure is not limited thereto. The cover member may be, for example, a plate-shaped member that follows an imaginary surface extending backward from the surface of the bulging portion 3b.

In the above-described embodiment, the depression 11 is provided at each of both end portions 6L and 6R of the upper surface 6a of the upper outer member 6 in the vehicle width direction, but the present disclosure is not limited thereto. The depression 11 may be provided at any position of the upper surface 6a of the upper outer member 6 or may be provided at a position other than the upper surface 6a of the upper outer member 6 as long as the damper stay 9 can be received therein.

The number of the depressions 11 is not limited to two. The number of the depressions 11 may be increased or decreased in response to the number of the damper stays 9.

The materials of the inner panel, the upper outer member 6, the lower outer member 7, and the aerodynamic spoiler 8 are not limited to the above-described examples. The material may be a resin having a composition different from that of the above-described example or a fiber-reinforced resin or a metal panel formed of steel or aluminum may be used.

A back door for a vehicle is a back door for a vehicle attached to a rear portion of a vehicle body to be opened and closed. The back door for the vehicle includes: an outer member having an upper surface; a support member disposed along the upper surface and supporting the outer member at a rear end portion of a roof panel of the vehicle body to be rotatable in an up and down direction; and a cover member separably attached to an upper portion of the outer member. The outer member includes a depression receiving the support member. The cover member is attached to cover the depression.

## Claims

1. A back door for a vehicle attached to a rear portion of a vehicle body to be opened and closed, comprising:
an outer member having an upper surface;
a support member disposed along the upper surface and supporting the outer member at a rear end portion of a roof panel of the vehicle body to be rotatable in an up and down direction; and
a cover member separably attached to an upper portion of the outer member,
wherein the outer member includes a depression receiving the support member, and
wherein the cover member is attached to cover the depression.

2. The back door for the vehicle according to claim 1,
wherein the cover member is an aerodynamic spoiler.

3. The back door for the vehicle according to claim 1 or 2,
wherein the depression is provided at each of both end portions of the outer member in a vehicle width direction.
